# EUROPEAN PATENT SPECIFICATION

(11) **EP 3 213 911 B1**
(45) Date of publication and mention of the grant of the patent: **29.05.2019**
(21) Application number: 17159002.9
(22) Date of filing: 02.03.2017
(51) Int. Cl.: B32B 5/04, B32B 5/26, B32B 7/04, B32B 3/08, B32B 3/14, A41D 1/08, A41D 13/00

(54) **IMPROVEMENTS IN OR RELATING TO FABRICS**
VERBESSERUNGEN AN ODER IM ZUSAMMENHANG MIT GEWEBEN
AMÉLIORATIONS APPORTÉES OU SE RAPPORTANT AUX TISSUS

(30) Priority: 03.03.2016 GB 201603701
(43) Date of publication of application: 06.09.2017
(73) Proprietor: TotalSim Ltd., Northamptonshire NN13 7UG (GB)
(72) Inventor: LEWIS, Robert, Northamptonshire NN13 7UG (GB); DALBY, Luke, Northamptonshire NN13 7UG (GB)
(74) Representative: Potter Clarkson

(56) References cited:
- EP-A2- 0 354 022
- WO-A1-96/28052
- WO-A1-2014/120867

## Description

This invention relates to a composite fabric for use in clothing garments for sportspersons, and to such a clothing garment formed from or including the said composite fabric.

Aerodynamic drag of moving bodies is a source of energy loss, with the power needed to overcome drag being determined by amount of drag multiplied by the velocity at which the body is travelling. For example, as much as 95% of the power generated by a sportsperson may need to be utilised to overcome the drag experienced in some events.

EP 0 354 022 discloses a plurality of non-stretchable film portions each attached at a single point and in an overlapping manner to a stretchable garment such as a swimsuit. Each film portion has a pattern on its outer surface which is configured to provide a reduction in drag caused by fluids flowing over the garment with the drag reduction capabilities of the film portions being restricted by the orientation of the pattern relative to the fluid flow. According to a first aspect of the invention there is provided a composite fabric, for use in clothing garments for sportspersons, comprising a textile support layer having one or more support members arranged thereupon, the or each support member defining a plurality of mutually spaced support formations, respective pairs of support formations having a flexible membrane portion extending therebetween, each flexible membrane portion being selectively moveable between a passive configuration in which it leaves unchanged a fluid flow passing thereover and an active configuration in which it initiates turbulent flow in a fluid flow passing thereover, wherein the or each flexible membrane portion (20a-20o) adopts an active configuration varying during use of the composite fabric (10) whereby the composite fabric (10) exhibits a reduced overall drag coefficient that is omnidirectional.

Having a plurality of membrane portions that are able to adopt a passive configuration which leaves unchanged a fluid flow passing thereover means that areas of the composite fabric in which membrane portions adopt such a configuration, perhaps only temporarily, do not experience increased drag, and so the overall drag coefficient of the composite fabric of the invention is not adversely effected by such areas.

Meanwhile, having a plurality of membrane portions that are able to selectively adopt an active configuration in which they initiate turbulent flow in a fluid passing thereover, means that those particular areas of the composite fabric, i.e. those which have adopted the active configuration, delay the onset of separation of the fluid flow from the composite fabric and so increases the pressure recovery adjacent to a downstream area of the composite fabric, such that the downstream area experiences reduced drag and the overall drag coefficient of the composite fabric is reduced.

Moreover, because the or each membrane portion which adopts the active configuration can vary, the composite fabric experiences reduced drag irrespective of the direction in which the fluid flow is passing thereover, and so the lower overall drag coefficient of the composite fabric is omnidirectional.

Furthermore, the varying nature of the or each membrane portion adopting the active configuration also permits the composite fabric to adapt to changes in the speed of the fluid flow passing thereover, and so allows different areas of the composite fabric to experience reduced drag at different fluid flow speeds. Hence the composite fabric of the invention is able to exhibit a reduced overall drag coefficient over a wide range of Reynolds number.

Optionally one or more membrane portions is arranged to move between its passive and active configurations in response to a change in the flow characteristics of the fluid flow passing thereover.

One or more membrane portions may be arranged to move from its passive configuration to its active configuration as the fluid flow begins to separate from the composite fabric.

Preferably one or more membrane portions is arranged to move from its active configuration to its passive configuration as the fluid flow begins to reattach to the composite fabric.

The foregoing features desirably make use of a change in the static pressure adjacent to one or more membrane portions to move the or each of them between its passive and active configurations as desired.

In a preferred embodiment of the invention each membrane portion in its active configuration creates a perturbation in the flow path of the fluid flow passing thereover.

The creation of such a perturbation leads to turbulent flow in the boundary layer of the fluid flow passing over the said membrane portion. Such turbulent flow creates a region of mixed energy and momentum adjacent to the corresponding membrane portion which delays the onset of separation of the fluid flow from the composite fabric such that there is increased pressure recovery adjacent to a downstream area of the composite fabric which results in the downstream area experiencing reduced drag.

Optionally the perturbation created by one or more of the membrane portions deviates from the position of the corresponding membrane portion in its passive configuration by not more than 5 mm.

Limiting the size of each perturbation in the foregoing manner helps to ensure that the cost, i.e. in terms of lost energy, of using the perturbation to initiate turbulent flow is similarly relatively low, such that a very low overall drag coefficient is achieved by the composite fabric of the invention.

In another preferred embodiment of the invention each membrane portion creates a perturbation by one of:
adopting a convex form;
adopting a concave form; and
oscillating between convex and concave forms.

Having one or more membrane portions adopt a convex form causes a separation bubble to form in the fluid flow adjacent to the given membrane portion. Such a separation bubble efficiently initiates a transition to turbulent flow which then reattaches at a downstream portion of the composite fabric.

Meanwhile, having one or more membrane portions adopt a concave form captures and holds in a controlled manner a separation bubble which, as indicated above, efficiently initiates turbulent flow.

In the meantime, oscillating between convex and concave forms, which may be at a fundamental or other harmonic frequencies, creates Tollmien-Schlicting waves or other instabilities which in turn give rise to turbulent flow.

One or more of the membrane portions may be elastic.

Such membrane portions help a clothing garment formed from the composite fabric of the invention to fit correctly.

In addition, in relation to a given membrane portion creating a perturbation by oscillating between convex and concave forms, the inclusion of an elastic membrane portion helps in harnessing an instability in the fluid flow passing over the said membrane portion to drive the oscillation in the form of a closed feedback vibration of the membrane portion.

In a further preferred embodiment of the invention the membrane portions are formed from a single unitary membrane.

Having each of the various membrane portions formed from a single unitary membrane assists in assembling, i.e. manufacturing, the composite fabric of the invention.

In addition it also helps to ensure that the various membrane portions exhibit uniform performance characteristics.

According to a second aspect of the invention there is provided a clothing garment formed from or including a composite fabric according to any preceding claim.

The composite fabric of the invention, when incorporated into a clothing garment, e.g. for a sportsperson, is able advantageously to universally provide low drag across both a range of speeds that the sportsperson may perform at, e.g. from running at approximately 4m/s to travelling in a bobsleigh at 40m/s, as well as across of range of different-sized body parts, e.g. from a wrist of around 50mm diameter to a torso of approximately 0.8m diameter.

There now follows a brief description of preferred embodiments of the invention, by way of non-limiting example, with reference being made to the following figures in which:
Figure 1 shows a schematic cross-sectional view from one side of a composite fabric according to a first embodiment of the invention;
Figures 2(a) to 2(c) illustrate schematically respective manners in which a membrane portion forming a part of the composite fabric shown in Figure 1 may create a perturbation; and
Figure 3 illustrates how the drag coefficient of a sphere enveloped in the composite fabric shown in Figure 1 varies with Reynolds number compared to other spherical bodies with differing surface configurations.

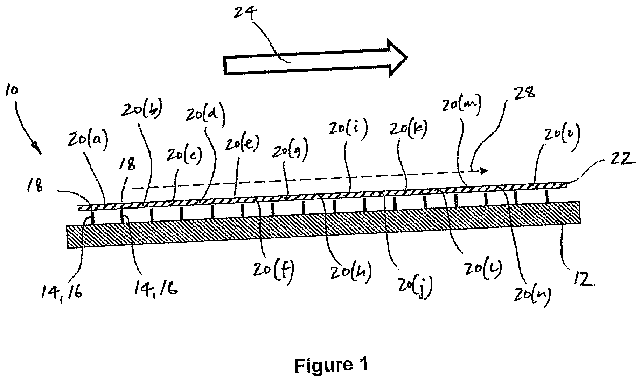

A composite fabric according to a first embodiment of the invention is designated generally by reference numeral 10, as shown in Figure 1.

The composite fabric 10 includes a textile support layer 12 which has a plurality of discrete support members 14 arranged thereupon. The textile support layer 12 is, by way of example, formed from an elastomeric material such as spandex or elastane, which exhibits a desired degree of elasticity, although other textile materials, elastic or otherwise, may also be used. In the embodiment shown each support member 14 is an elongate, substantially straight, ridge 16 that is applied onto the textile support layer 12 in the form of a fusible component which, by way of example, is a silicone.

In other embodiments of the invention (not shown) one or more of the discrete support members may instead be an elongate, curved ridge, or a respective pillar or other support structure. Such other embodiments of the invention may also include a single, unitary support member that takes the form, for example, of a square or triangular lattice.

Such other support members may similarly be applied onto the support layer in the form of a fusible component, which could also be or include an adhesive.

Any one or more of the support members may also be integrally formed within the textile support layer, e.g. by knitting, weaving or embroidering.

In any event the or each support member, and more particularly the support members 14 shown in Figure 1, define a plurality of mutually spaced support formations 18. The support formations 18 are uniformly spaced from one another by approximately 10mm, although this need not necessarily be the case and may, for example range between 2mm and 30mm.

In addition, each of the support formations 18 extends beyond the support layer 12 by a height of approximately 0.2mm. In further embodiments of the invention such protrusion of one or more of the support formations 18 beyond the support layer 12 may differ from 0.2mm, and may for example instead extend beyond the support layer 12 by a height of between 0.1mm and 4mm.

Returning to the embodiment shown in Figure 1, respective pairs of support formations 18 have a flexible membrane portion 20a, 20b, 20c, 20d, 20e, 20f, 20g, 20h, 20i, 20j, 20k, 20l, 20m, 20n, 20o extending therebetween. In the Figure 1 embodiment of the invention, pairs of adjacent support formations 18 have a membrane portion 20a - 20o extending therebetween, although in other embodiments of the invention one or more of the membrane portions may extend between pairs of support formations which are interposed by one or more other support formations.

Each membrane portion 20a - 20o is elastic, and the plurality of elastic membrane portions 20a - 20o are all formed from a single, unitary membrane 22 which lies over each of the support formations 18. The unitary membrane 22 is a textile membrane which, by way of example is formed from a spandex or elastane material. Other membranes and indeed individual membrane portions may be used, however, and such other membranes or portions thereof may or may not be elastic.

In all instances, each membrane portion 20a - 20o is selectively moveable between a passive configuration, as shown in Figure 1, in which it leaves unchanged a fluid flow 24 passing thereover, and an active configuration in which it initiates turbulent flow in the said fluid flow 24. Typically the fluid flow 24 is air, although this need not necessarily be the case.

Each membrane portion 20a - 20o is arranged to move between its passive and active configurations in response to a change in the flow characteristics of the fluid flow 24 passing thereover. More particularly, each membrane portion 20a - 20o is arranged to move from its passive configuration to its active configuration as the fluid flow 24 begins to separate from the composite fabric 10. In other words, each membrane portion 20a - 20o will move from its passive configuration to its active configuration if the fluid flow 24 passing thereover begins to separate from the said membrane portion 20a - 20o, or at least a segment of a given membrane portion 20a - 20o will move into an active configuration if the fluid flow 24 immediately overhead is separating, or is about to separate from the said segment of membrane portion 20a - 20o.

Moreover, each membrane portion 20a - 20o is arranged to move from its active configuration to its passive configuration as the fluid flow 24 passing thereover begins to reattach to the composite fabric 10, i.e. each membrane portion 20a - 20o will move from its active configuration to its passive configuration if the fluid flow 24 passing thereover begins to reattach to the said membrane portion 20a - 20o, or at least a segment of a given membrane portion 20a - 20o which has previously adopted an active configuration will return to a completely passive configuration if the fluid flow 24 immediately overhead is reattaching, or is about to reattach, to the said segment of membrane portion 20a - 20o.

Each membrane portion 20a - 20o, when in its passive configuration, lies essentially taught between the corresponding pair of support formations 18, i.e. as shown in Figure 1.

Meanwhile, each membrane portion 20a - 20o, when in its active configuration, creates a perturbation 26 in the flow path 28 of the fluid flow 24 which passes over the said membrane portion 20a - 20o.

Each membrane portion 20a - 20o is able to create a perturbation 26 in each of three manners, as described below.

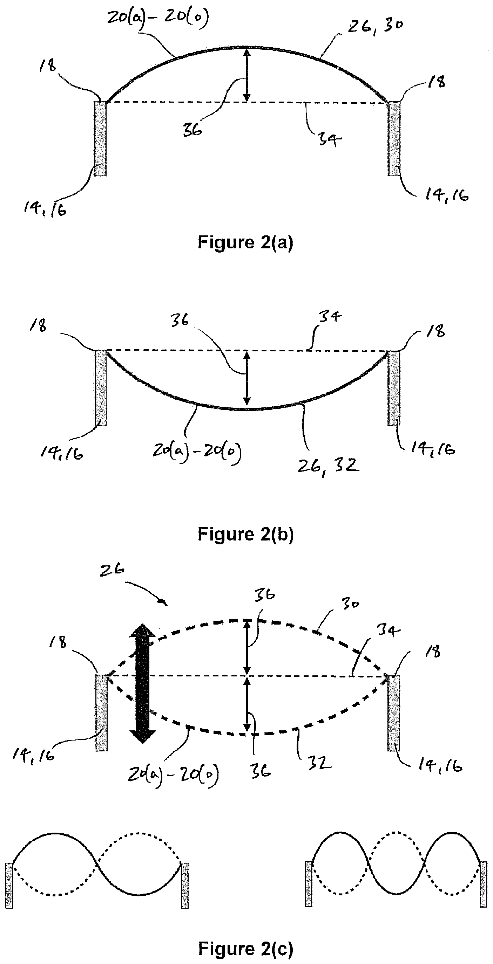

In a first manner a given membrane portion 20a - 20o creates a perturbation 26 by adopting a convex form 30, as shown schematically in Figure 2(a).

In use, such a convex form 30 is generated by low pressure arising in the fluid flow 24 above the said given membrane portion 20a - 20o as a result of the fluid flow 24 separating or being about to separate from the membrane portion 20a - 20o. The convex form 30 causes a separation bubble (not shown) to form in the fluid flow 24 adjacent to the given membrane portion 20a - 20o. Such a separation bubble efficiently initiates a transition to turbulent flow within the fluid flow 24. The turbulent flow within the fluid flow 24 then reattaches at a downstream portion of the composite fabric 10.

In a second manner, a given membrane portion 20a - 20o creates a perturbation 26 by adopting a concave form 32, as shown schematically in Figure 2(b).

In use, such a concave form 32 is generated as a result of the boundary layer of the fluid flow 24 separating from the membrane portion 20a - 20o and thereby depressing the membrane portion 20a - 20o inwards. The concave form 32 captures and holds in a controlled manner a separation bubble (not shown) which forms within the fluid flow 24. Such a separation bubble, as indicated above, efficiently initiates a transition to turbulent flow within the fluid flow 24. The turbulent flow within the fluid flow 24 then again reattaches at a downstream portion of the composite fabric 10.

In a third manner, a given membrane portion 20a - 20o oscillates between the convex and concave forms 30, 32, as shown schematically in Figure 2(c). In this regard, the main illustration in Figure 2(c) shows a given membrane portion 20a - 20o oscillating at a fundamental harmonic frequency. One or more of the membrane portions 20a - 20o may, however, oscillate instead at other harmonic frequencies, e.g. as also shown schematically in Figure 2(c).

In use, such oscillation between convex and concave forms 30, 32 arises as a consequence of the boundary layer of the fluid flow 24 beginning to separate from the said membrane portion 20a - 20o and in doing so creating an instability in the membrane portion 20a - 20o which causes a closed feedback vibration of the said membrane portion 20a - 20o. The frequency of the vibration, i.e. oscillation, in turn gives rise to Tollmien-Schlicting waves or other instabilities which initiate turbulent flow in the fluid flow 24.

With respect to each of the three foregoing manners in which a given membrane portion 20a - 20o may create a perturbation 26 when it its active configuration, the resulting perturbation 26 does not deviate from the position 34 of the corresponding membrane portion 20a - 20o in its passive configuration (i.e. as shown by thin dashed line in each of Figures 2(a) to 2(c)) by a distance 36 of more than approximately 5 mm.

In use, the individual membrane portion 20a - 20o, or group of membrane portions 20a - 20o, that moves from its passive configuration to its active configuration can vary according to the characteristics of the fluid flow passing immediately over the or each membrane portion 20a - 20o.

Such an ability to vary in real time which individual membrane portion 20a - 20o, or group of membrane portions 20a - 20o, moves into its active configuration permits the composite fabric 10 of the invention to exhibit a low drag coefficient C_{D} irrespective of the orientation of the fluid flow 24 relative to the composite fabric 10, and more particularly irrespective of the orientation of the support members 14 within the composite fabric 10 relative to the direction of fluid flow 24.

In addition, in use the real time varying nature of the membrane portions 20a - 20o which adopt an active configuration allows different areas of the composite fabric 10 to experience reduced drag at different fluid flow 24 speeds, and so the composite fabric 10 of the invention is able to exhibit a reduced overall drag coefficient C_{D} over a wide range of Reynolds number Rₑ.

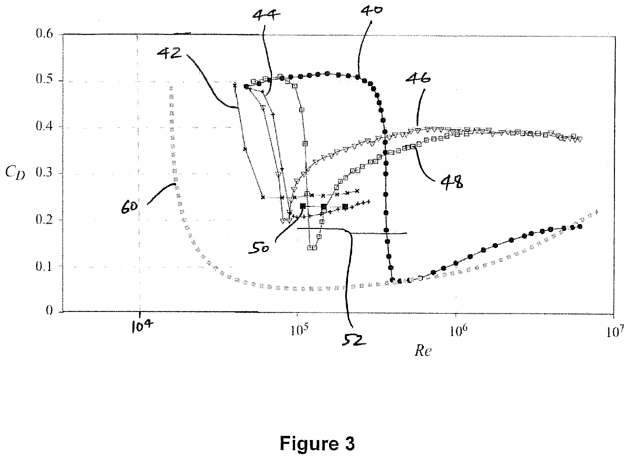

For example, Figure 3 illustrates how the drag coefficient C_{D} of a sphere 60 enveloped in the composite fabric 10 of the invention varies with Reynolds number compared to other spherical bodies with differing surface configurations.

When natural, unforced transition to turbulent flow occurs on a smooth sphere 42 the drag coefficient C_{D} drops to about 0.08 but only at a specific Reynolds number Rₑ and then gradually increases with increasing Reynolds number Rₑ.

A first dimpled sphere 42, such as a golf ball, has omnidirectional drag characteristics but is only able to achieve a reduction in drag coefficient C_{D} from 0.5 to about 0.23, and only over a relatively small range of Reynolds number Rₑ. A second dimpled sphere 44 is encumbered with similar limitations.

A first roughened sphere 46 is, like the dimpled spheres 42, 44 similarly insensitive to the direction of the fluid flow 24 passing over it. It is however able to achieve a lower drag coefficient C_{D} than both of the dimpled spheres 42, 44 but only at a very specific Reynolds number Rₑ. A second roughened sphere 48 is able to achieve an even lower drag coefficient C_{D} but again, only at a very specific Reynolds number Rₑ.

In the meantime a first tripped sphere 50, i.e. a sphere having a first trip formation arranged on the surface thereof to disrupt fluid flow thereacross, is able to achieve a lower drag coefficient C_{D} than the first dimpled sphere 42 but it is costly in terms of lost energy and so achievable over only a short range of Reynolds number Rₑ. A second tripped sphere 52 is similarly able to achieve a lower drag coefficient C_{D} than the second dimpled sphere 42, but again only over a short range of Reynolds number Rₑ. Such tripped spheres 52, 52 are also both only effective at reducing the drag coefficient when orientated in a specific manner relative to the fluid flow and so they have limited usefulness in situations where the direction of fluid flow relative to a body is likely to change over time.

In contrast to each of the above, a composite fabric sphere 60, i.e. a sphere with a surface covered by the composite fabric 10 of the invention, exhibits a low drag coefficient C_{D} commensurate with the lowest drag coefficient achievable by natural, unforced transition to turbulent flow on a smooth sphere 42 but over a much wider range of Reynolds number Rₑ than either the smooth sphere 42 or than is possible with any of the other surface configurations mentioned above.

The composite fabric 10 of the invention therefore enables, e.g. when incorporated into a sportswear garment, such a garment to exhibit a low drag coefficient both when worn on body parts with a range of varying diameters, such as relatively narrow wrists through to much wider torsos, and also when used at a range of different speeds, e.g. from running to tobogganing.

More particularly, modification of the support formations 18, i.e. in terms of the relative spacing, height and patterning of the or each support member 14 that defines the support formations 18 can be used to tune the low drag performance of the composite fabric 10 according to the size and shape of the body part around which it is to be used as well as the speed at which the body part will likely move, e.g. in the course of a particular sporting event.

## Claims

1. A composite fabric (10), for use in clothing garments for sportspersons, comprising:
a textile support layer (12) having one or more support members (14) arranged thereupon, the or each support member (14) defining a plurality of mutually spaced support formations (18)
respective pairs of support formations (18) having a flexible membrane portion extending therebetween, each flexible membrane portion (20a -20o) being selectively moveable between a passive configuration in which it leaves unchanged a fluid flow (24) passing thereover and an active configuration in which it initiates turbulent flow in a fluid flow (24) passing thereover;
wherein the or each flexible membrane portion (20a -20o) adopts an active configuration varying during use of the composite fabric (10) whereby the composite fabric (10) exhibits a reduced overall drag coefficient that is omnidirectional.

2. A composite fabric (10) according to Claim 1 wherein one or more membrane portions (20a -20o) is arranged to move between its passive and active configurations in response to a change in the flow characteristics of the fluid flow (24) passing thereover.

3. A composite fabric (10) according to Claim 2 wherein one or more membrane portions (20a -20o) is arranged to move from its passive configuration to its active configuration as the fluid flow begins to separate from the composite fabric (10).

4. A composite fabric (10) according to Claim 2 or Claim 3 wherein one or more membrane portions (20a -20o) is arranged to move from its active configuration to its passive configuration as the fluid flow begins to reattach to the composite fabric (10).

5. A composite fabric (10) according to any preceding claim wherein each membrane portion (20a -20o) in its active configuration creates a perturbation in the flow path (28) of the fluid flow (24) passing thereover.

6. A composite fabric (10) according to Claim 5 wherein the perturbation created by one or more of the membrane portions (20a -20o) deviates from the position of the corresponding membrane portion (20a -20o) in its passive configuration by not more than 5 mm.

7. A composite fabric (10) according to Claim 5 or Claim 6 wherein each membrane portion (20a -20o) creates a perturbation by one of:
adopting a convex form;
adopting a concave form; and
oscillating between convex and concave forms.

8. A composite fabric (10) according to any preceding claim wherein one or more of the membrane portions (20a -20o) is elastic.

9. A composite fabric (10) according to any preceding claim wherein the membrane portions (20a -20o) are formed from a single unitary membrane (22).

10. A clothing garment formed from or including a composite fabric (10) according to any preceding claim.

## Patentansprüche

1. Verbundstoff (10) zum Verwenden in Kleidungsstücken für Sportler, Folgendes umfassend:
eine Textilträgerschicht (12) mit einem oder mehreren Trägerelementen (14), die darauf angeordnet sind, wobei das oder jedes Trägerelement (14) mehrere voneinander beabstandete Trägerformungen (18) definiert, jeweilige Paare von Trägerformungen (18) einen flexiblen Membranabschnitt aufweisen, der sich dazwischen erstreckt, wobei jeder flexible Membranabschnitt (20a-20o) selektiv zwischen einer passiven Konfiguration, in der er eine darüber passierende Fluidströmung (24) unverändert lässt, und einer aktiven Konfiguration, in der er eine turbulente Strömung in einer darüber passierenden Fluidströmung (24) initiiert, bewegbar ist;
wobei der oder jeder flexible Membranabschnitt (20a - 20o) eine aktive Konfiguration annimmt, die während des Verwendens des Verbundstoffs (10) variiert, wodurch der Verbundstoff (10) einen reduzierten Gesamtströmungswiderstandskoeffizienten aufzeigt, der ungerichtet ist.

2. Verbundstoff (10) nach Anspruch 1, wobei ein oder mehrere Membranabschnitte (20a-20o) angeordnet sind, um sich zwischen ihrenpassiven und ihren aktiven Konfigurationen als Reaktion auf eine Änderung in den Strömungseigenschaften der darüber passierenden Fluidströmung (24) zu bewegen.

3. Verbundstoff (10) nach Anspruch 2, wobei ein oder mehrere Membranabschnitte (20a-20o) angeordnet sind, um sich von ihren passiven Konfiguration zu ihren aktiven Konfigurationen zu bewegen, wenn der Fluidstrom beginnt, sich von dem Verbundstoff (10) zu trennen.

4. Verbundstoff (10) nach Anspruch 2 oder 3, wobei ein oder mehrere Membranabschnitte (20a - 20o) angeordnet sind, um sich von ihren aktiven Konfigurationen zu ihren passiven Konfigurationen zu bewegen, wenn der Fluidstrom beginnt, sich wieder an dem Verbundstoff zu befestigen (10).

5. Verbundstoff (10) nach einem der vorhergehenden Ansprüche, wobei jeder Membranabschnitt (20a-20o) in seiner aktiven Konfiguration eine Störung in dem Strömungspfad (28) des darüber passierenden Fluidstroms (24) schafft.

6. Verbundstoff (10) nach Anspruch 5, wobei die Störung, die durch einen oder mehrere der Membranabschnitte (20a-20o) geschaffen wird, von der Position des entsprechenden Membranabschnitts (20a-20o) in seiner passiven Konfiguration um nicht mehr als 5 mm abweicht.

7. Verbundstoff (10) nach Anspruch 5 oder 6, wobei jeder Membranabschnitt (20a-20o) eine Störung durch eins der Folgenden schafft:
Annehmen einer konvexen Form;
Annehmen einer konkaven Form; und
Oszillieren zwischen einer konvexen und einer konkaven Form.

8. Verbundstoff (10) nach einem der vorhergehenden Ansprüche, wobei einer oder mehrere der Membranabschnitte (20a-20o) elastisch sind.

9. Verbundstoff (10) nach einem der vorhergehenden Ansprüche, wobei die Membranabschnitte (20a-20o) aus einer einzelnen einheitlichen Membran (22) ausgebildet sind.

10. Kleidungsstück, das aus einem Verbundstoff (10) nach einem der vorhergehenden Ansprüche ausgebildet ist oder ihn einschließt.

## Revendications

1. Tissu composite (10), destiné à une utilisation dans des vêtements pour sportifs, comprenant :
une couche de support textile (12) sur laquelle sont agencés un ou plusieurs élément(s) de support (14), l'élément ou chaque élément de support (14) définissant une pluralité de formations de support mutuellement espacées (18), des paires respectives de formations de support (18) dotées d'une partie de membrane s'étendant entre celles-ci, chaque partie de membrane flexible (20a-20o) pouvant être déplacée de manière sélective entre une configuration passive dans laquelle elle laisse inchangé un écoulement de fluide (24) passant au-dessus de celle-ci et une configuration active dans laquelle elle initie un écoulement turbulent dans un écoulement de fluide (24) en passant au-dessus de celle-ci ;
dans lequel la ou chaque partie de membrane flexible (20a-20o) adopte une configuration active variant pendant l'utilisation du tissu composite (10), dans lequel le tissu composite (10) présente un coefficient de résistance global réduit qui est omnidirectionnel.

2. Tissu composite (10) selon la revendication 1, dans lequel une ou plusieurs partie(s) de membrane (20a-20o) est/sont agencée(s) pour se déplacer entre ses/leurs configurations passives et actives en réaction à changement des caractéristiques d'écoulement de l'écoulement de fluide (24) passant au-dessus de celle-ci/celles-ci.

3. Tissu composite (10) selon la revendication 2, dans lequel une ou plusieurs partie(s) de membrane (20a-20o) est/sont agencée(s) pour passer de sa/leur configuration passive à sa/leur configuration active lorsque l'écoulement de fluide commence à se séparer du tissu composite (10).

4. Tissu composite (10) selon la revendication 2 ou 3, dans lequel une ou plusieurs partie(s) de membrane (20a-20o) est/sont agencée(s) pour passer de sa/leur configuration active à sa/leur configuration passive lorsque l'écoulement de fluide commence à se rattacher au tissu composite (10).

5. Tissu composite (10) selon l'une des revendications précédentes, dans lequel chaque partie de membrane (20a-20o) dans sa configuration active crée une perturbation dans le trajet d'écoulement (28) de l'écoulement de fluide (24) passant au-dessus de celle-ci.

6. Tissu composite (10) selon la revendication 5, dans lequel la perturbation créée par une ou plusieurs partie(s) de membrane (20a-20o) s'écarte de la position de la partie de membrane correspondante (20a-20o) dans sa configuration passive de pas plus de 5 mm.

7. Tissu composite (10) selon la revendication 5 ou 6, dans lequel chaque partie de membrane (20a-20o) crée une perturbation par l'un de ce qui suit :
l'adoption d'une forme convexe ;
l'adoption d'une forme concave ; et
l'oscillation entre les formes convexe et concave.

8. Tissu composite (10) selon l'une des revendications précédentes, dans lequel une ou plusieurs partie(s) de membrane (20a-20o) est/sont élastique(s).

9. Tissu composite (10) selon l'une des revendications précédentes, dans lequel les parties de membrane (20a-20o) sont formées à partir d'une seule membrane unitaire (22).

10. Vêtement formé à partir ou comprenant un tissu composite (10) selon l'une des revendications précédentes.
